# EUROPEAN PATENT SPECIFICATION

(11) **EP 2 738 119 B1**
(45) Date of publication and mention of the grant of the patent: **26.10.2016**
(21) Application number: 13195580.9
(22) Date of filing: 03.12.2013
(51) Int. Cl.: B65G 17/44, B65G 17/46

(54) **Method and apparatus for transporting pellet-shaped articles**
Verfahren und Vorrichtung zum Transport pelletförmiger Artikel
Procédé et appareil pour le transport d'articles en forme de pastilles

(30) Priority: 03.12.2012 US 201213692860
(43) Date of publication of application: 04.06.2014
(73) Proprietor: ACKLEY MACHINE CORP., Moorestown, NJ 08057 (US)
(72) Inventor: Ackley, E. Michael, Mannington, NJ 08079 (US); Deluccia JR., Vincent M., Riverside, NJ 08075-3922 (US)
(74) Representative: Chandrahasen, Gerard

(56) References cited:
- EP-A2- 0 183 611
- US-A- 5 655 453
- US-A- 5 988 364
- US-A1- 2010 252 401
- US-B1- 6 390 280

## Description

### FIELD OF THE TECHNOLOGY

The present invention relates to methods and apparatuses for transporting pellet-shaped articles, e.g., tablets, caplets, lentil-shaped articles, etc. It is directed to a carrier bar according to the preamble of claim 1, a conveyer apparatus according to the preamble of claim 8 and a method according to the preamble of claim 9.

### BACKGROUND OF THE TECHNOLOGY

Processing of pellet-shaped articles (e.g., tablets, caplets, lentil-shaped articles, etc), such as marking the articles with indicia, coloring the articles, laser drilling holes in the articles, coating the articles, and/or inspecting the articles is known in the art. The articles may be transported past one or more processing stations (e.g., printing, inspection, drilling, etc.) by carrier bars provided with one or more article receiving pockets.

In a typical application, the carrier bars are transported along a conveyer. The articles are fed into the pockets on the carrier bar from a hopper. Empty pockets are brought past the hopper for receiving the articles and the pockets are gravity-fed with the articles. The further processing of the articles in the pockets requires that the articles be oriented uniformly and held in position in the pockets during processing. To accomplish this uniform orientation and stable positioning, fairly close tolerances between the articles and the interior of the pockets must be maintained. However, it is these same tolerances that cause difficulty in loading or filling the individual pockets with the individual articles. US 5,655,453 describes a pellet marking device according to the preamble of claim 8 which includes a ramp-type carrier system for receiving pellet-shaped articles to be imprinted from a feed hopper and for conveying the received pellet-shaped articles to a printing device combined with the carrier system. It discloses further a carrier bar according to the preamble of claim 1 and a method according to the preamble of claim 9. US 2010/0252401 describes a carrier bar for conveying at least one caplet along a predetermined conveyer path including at least one pocket adapted to receive a caplet.

Thus, there is a need in the art for an improved method and apparatus for transporting articles that do not suffer from the above-mentioned drawbacks.

### SUMMARY OF THE TECHNOLOGY

One aspect of the present invention is to provide a carrier bar that overcomes one or more of the shortcomings of the prior art, e.g., to maintain the article within the pocket in a more consistent and repeatable position for later processing. This object is achieved by a carrier bar according to claim 1.

Another aspect of the present invention relates to a method for transporting and processing a pellet-shaped article (e.g., a caplet, a tablet, a lentil-shaped article, etc.). The method includes conveying the pellet-shaped article according to claim 9 along a direction of travel such that he pellet-shaped article seats in a dimple offset from a center of said pocket.

Another aspect of the present invention relates to a conveyor apparatus for processing pellet-shaped articles according to claim 8.

Other aspects, features, and advantages of this technology will become apparent from the following detailed description when taken in conjunction with the accompanying drawings, which are a part of this disclosure and which illustrate, by way of example, principles of this invention.

### BRIEF DESCRIPTION OF THE DRAWINGS

The accompanying drawings facilitate an understanding of the various examples of this technology. In such drawings:
Fig. 1 is a perspective view of a conveyer apparatus for conveying a plurality of pellet-shaped articles according to an example of the present technology;
Fig. 2A is a side view of an example of a pellet-shaped article;
Fig. 2B is a top view of an example of a pellet-shaped article;
Fig. 2C is a cross-sectional view through line 2C-2C of Fig. 2B;
Fig. 3A is a side view of an example of a pellet-shaped article;
Fig. 3B is a top view of an example of a pellet-shaped article;
Fig. 3C is a cross-sectional view through line 3C-3C of Fig. 3B;
Fig. 4 is a perspective view of a carrier bar having a plurality of pockets, according to an example of the present technology;
Fig. 5 is a top view of a carrier bar, according to an example of the present technology;
Fig. 5A is a top view of a carrier bar with a variation of the orientation of the pockets, according to an example of the present technology;
Fig. 5B is a top view of a carrier bar with a variation of the orientation of the pockets, according to an example of the present technology;
Fig. 5C is a top view of a carrier bar with a variation of the orientation of the pockets, according to an example of the present technology;
Fig. 6 is a bottom view of a carrier bar, according to an example of the present technology;
Fig. 7 is a front view of a carrier bar, according to an example of the present technology;
Fig. 8 is a side view of a carrier bar, according to an example of the present technology;
Fig. 9 is an enlarged perspective view of the pockets of a carrier bar, according to an example of the present technology;
Fig. 10 is an enlarged top view of a pocket of a carrier bar, according to an example of the present technology;
Fig. 10A is a cross-sectional view through line 10A-10A of Fig. 10;
Fig. 10B is a cross-sectional view through line 10B-10B of Fig. 10;
Fig. 11 is a cross-sectional view through line 11-11 of Fig. 10 with a pellet-shaped article in the pocket;
Fig. 12 is a perspective view of a carrier bar, according to another example of the present technology;
Fig. 13 is a top view of a carrier bar, according to an example of the present technology;
Fig. 14 is a bottom view of a carrier bar, according to an example of the present technology;
Fig. 15 is a front view of a carrier bar, according to an example of the present technology;
Fig. 16 is a side view of a carrier bar, according to an example of the present technology;
Fig. 17 is a detailed perspective view of the pockets of a carrier bar, according to an example of the present technology;
Fig. 18 is a detailed top view of a pocket of a carrier bar, according to an example of the present technology;
Fig. 18A is a cross-sectional view through line 18A-18A of Fig. 18;
Fig. 18B is a cross-sectional view through line 18B-18B of Fig. 18; and
Fig. 19 is a cross-sectional view through line 18B-18B of Fig. 18 and with a pellet-shaped article in the pocket.

### DETAILED DESCRIPTION OF ILLUSTRATED EXAMPLES

The following description is provided in relation to several examples which may share common characteristics and features. It is to be understood that one or more features of any one example may be combinable with one or more features of the other examples. In addition, any single feature or combination of features in any of the examples may constitute additional examples.

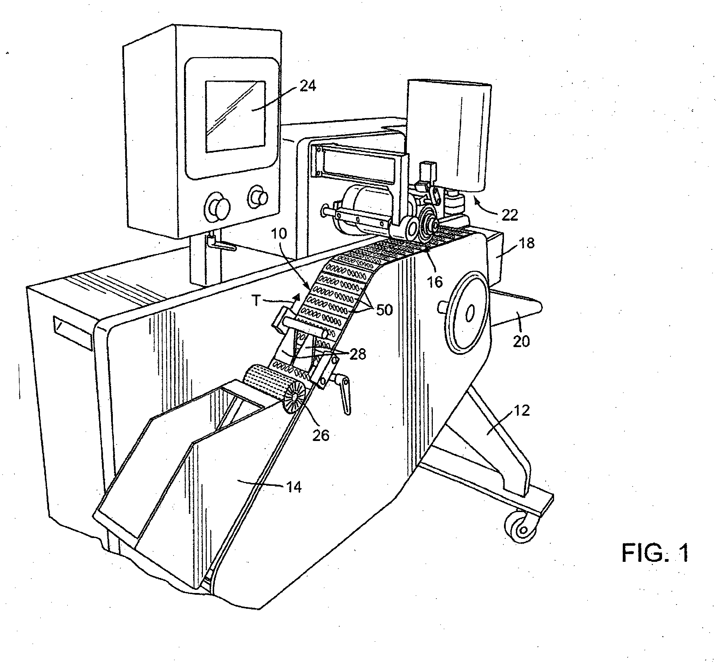

Fig. 1 illustrates an exemplary conveyer apparatus 10 including a plurality of carrier bars 50 structured to transport or convey a plurality of pellet-shaped articles along a predetermined conveyer path. As described in greater detail below, each carrier bar 50 is structured to receive and positively seat the pellet-shaped articles within respective pockets of the carrier bar in a manner that ensures that a side of each pellet-shaped article is viewable or exposed for processing operations such as marking, drilling, and/or inspecting. The conveyor apparatus 10 drives the carrier bars 50 and the pellet-shaped articles contained therein through a conveyor for processing. Alternatively or additionally, other apparatuses may also be used to convey the pellet-shaped articles, such as a conveyor belt, a conveyor loop, and/or a carrier drum. Examples of such apparatuses may be found in U.S. Patent No. 8,072,590.

As shown in Fig. 1, the conveyer apparatus 10 may be supported upon a frame 12 that is also structured to support a feed hopper 14, a processing station 16 (e.g., printing, marking, drilling, etc.), first and second bins 18, 20 where pellet-shaped articles are collected, and an inspection unit 22 for inspecting the pellet-shaped articles. A display monitor 24 may extend from the frame and displays diagnostic information to an operator.

In this example of the present technology, the feed hopper 14 is disposed over a ramped section of the conveyer apparatus to receive a supply of pellet-shaped articles and deliver the pellet-shaped articles onto the conveyer apparatus. As the conveyer apparatus is drawn beneath the feed hopper 14, the carrier bars 50 will become filled with pellet-shaped articles. Before proceeding from beneath the feed hopper 14, the carrier bars 50 and the pellet-shaped articles will encounter a seating member to assist in seating the pellet-shaped articles within the pockets of the carrier bars. In the illustrated example, the seating member is in the form of a brush 26 that rotates, e.g., in an opposite direction than the direction of transport of the pellet-shaped articles. The brush 26 operates to assist in seating the pellet-shaped articles within the pockets, and operates to return pellet-shaped articles to the feed hopper that have not been received within one of a plurality of pockets provided in the carrier bars. Alternatively or in addition to the brush, the seating member may include one or more fingers provided downstream from the feed hopper to assist in seating the pellet-shaped articles. After the carrier bars pass by the seating member, they pass under one or more blow-back members 28 (e.g., air nozzles) structured to dislodge any articles seated within the pockets of the carrier bars, e.g., when performing diagnostic tests or cleaning the conveyer. Further details of such an arrangement are disclosed in U.S. Patent No. 7,102,741, which is incorporated herein by reference in its entirety.

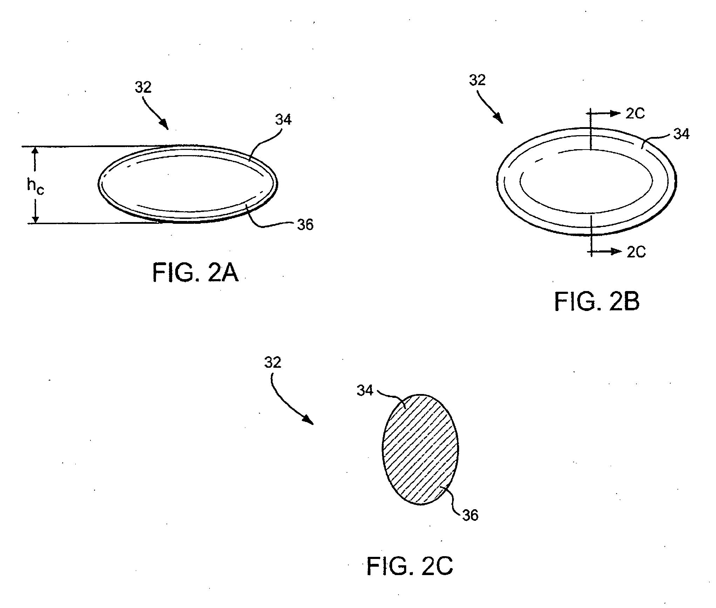

Figs. 2A-2C show an exemplary pellet-shaped article 32 which is not part of the invention. Fig. 2A shows a side view of the pellet-shaped article 32 with a height h_{c}. The pellet-shaped article 32 also has a top side or portion 34 and a bottom side or portion 36. Fig. 2B shows a top view of the pellet-shaped article 32 and the top side 34. Fig. 2C is a cross-sectional view of the pellet-shaped article 32 taken through line 2C-2C of Fig. 2B and shows the top side 34 and the bottom side 36.

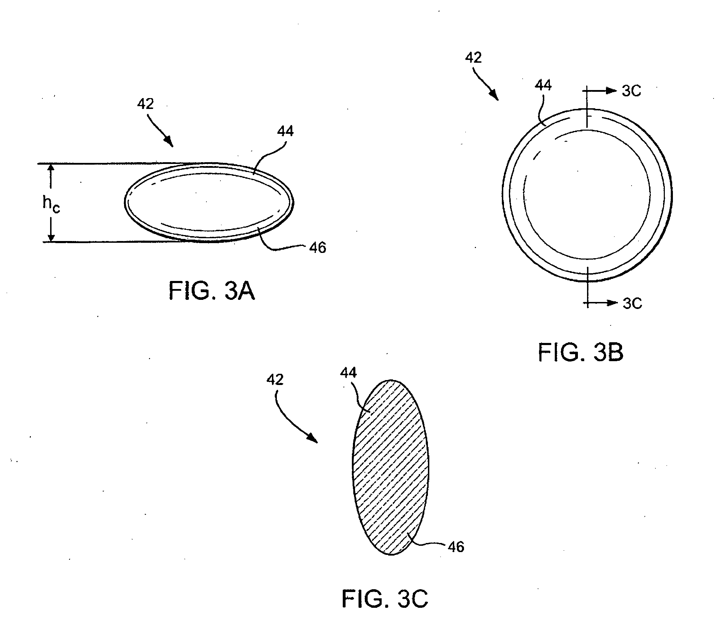

Figs. 3A-3C show an exemplary pellet-shaped article 42 which is not part of the invention. Fig. 3A shows a side view of the pellet-shaped article 42 with a height h_{c}. The pellet-shaped article 42 also has a top side or portion 44 and a bottom side or portion 46. Fig. 3B shows a top view of the pellet-shaped article 42 and the top side 44. Fig. 3C is a cross-sectional view of the pellet-shaped article 42 taken through line 3C-3C of Fig. 3B and shows the top side 44 and the bottom side 46.

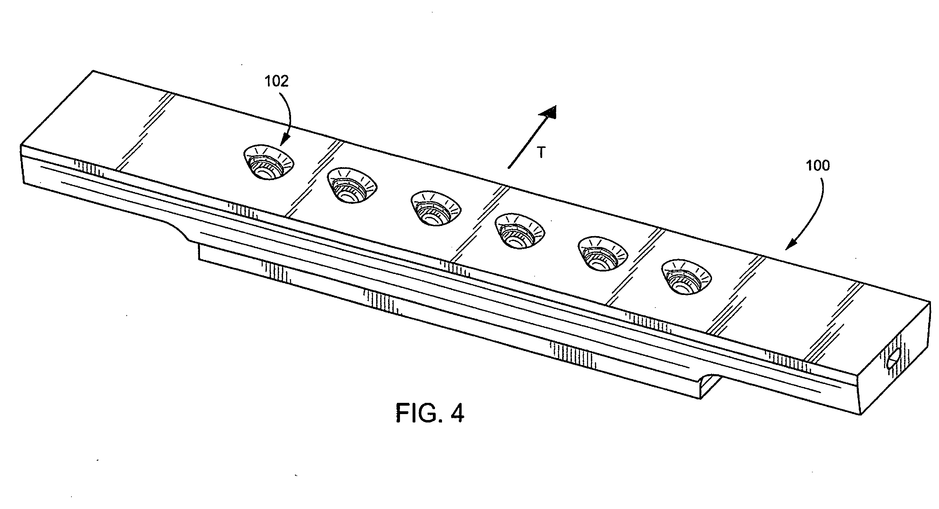

Fig. 4 shows a carrier bar 100, according to an example of the present invention, in perspective view. The carrier bar 100 includes a plurality of pockets 102 and travels in direction T.

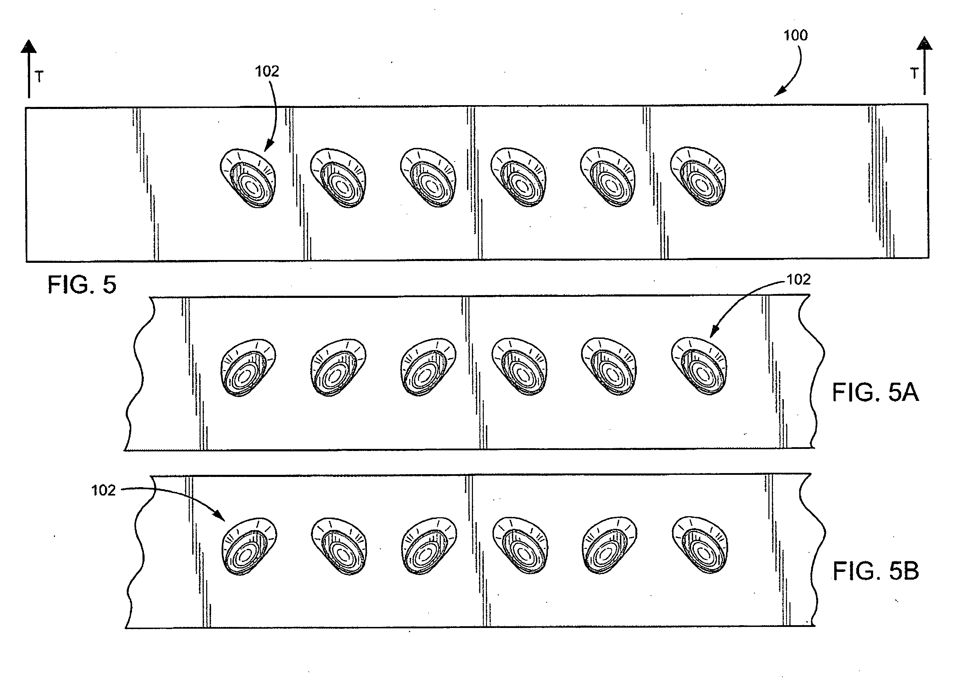

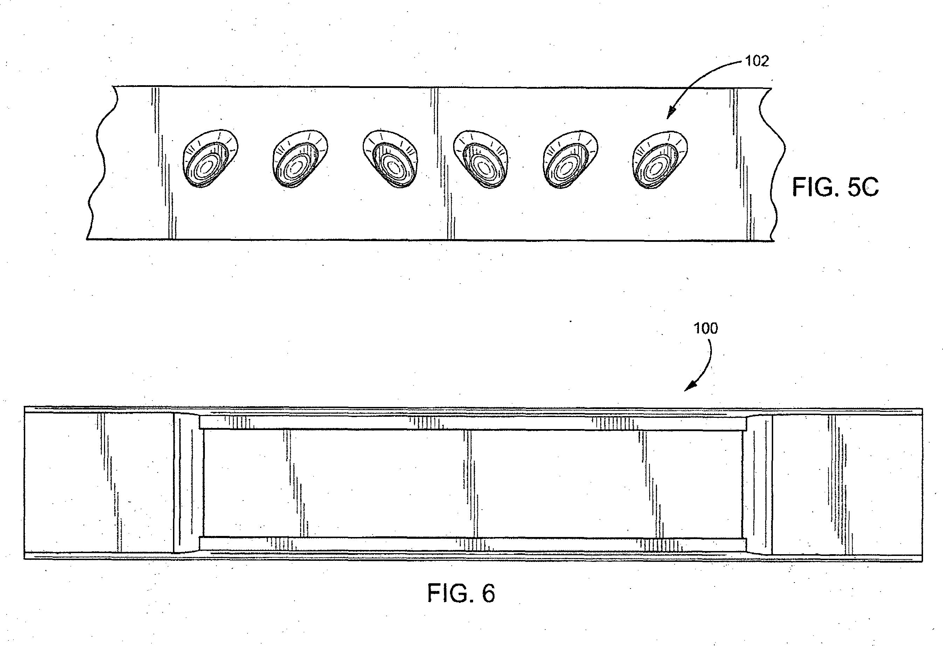

Fig. 5 shows a top view of the carrier bar 100 and pockets 102. Arrows T indicate the direction of travel.

Figs. 5A-5C are further top views of the carrier bar 100 and pockets 102. Fig. 5A shows two groups of pockets 102, with one group of pockets being oriented in one direction and another group of pockets oriented in another direction, or in mirror image. Fig. 5B shows pockets 102 oriented in different directions in an alternating pattern. Fig. 5C shows multiple groups of pockets 102 where the orientation of each group of pockets alternates.

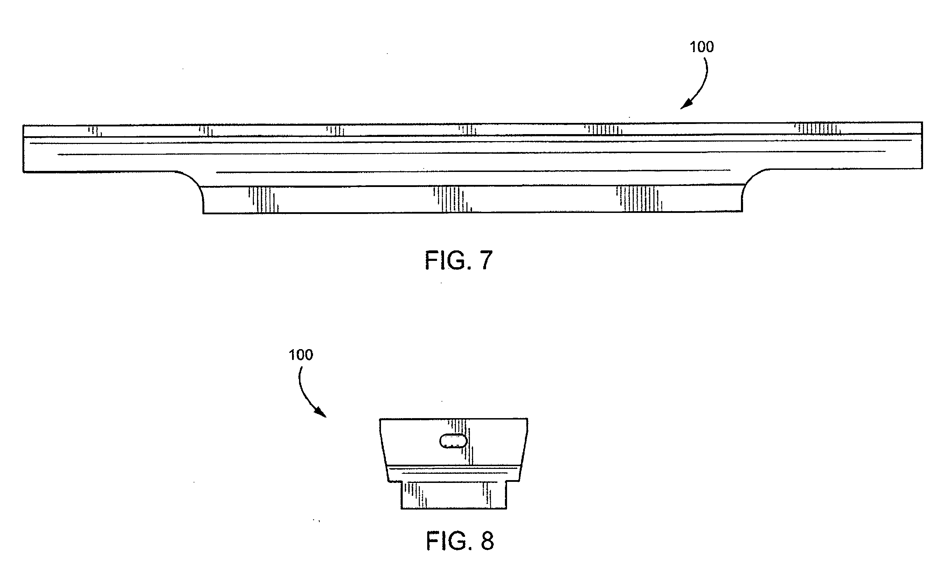

Fig. 6 shows a bottom view of the carrier bar 100. Fig. 7 shows a side view of the carrier bar 100. Fig. 8 shows a side or end view of the carrier bar 100.

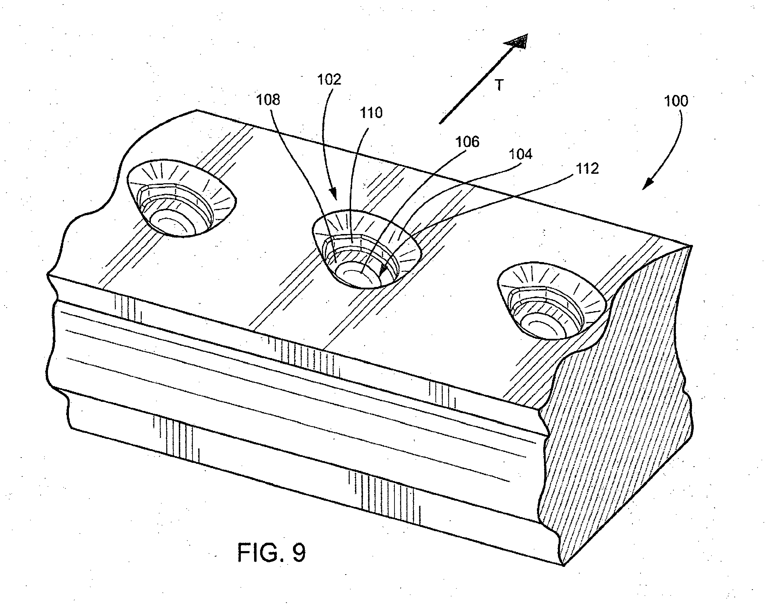

Fig. 9 shows a detailed perspective view of a pocket 102 on the carrier bar 100, according to an example of the present technology. While this view shows the pocket 102 disposed in a carrier bar, it is also to be understood that such a pocket may be located on or provided to any conveyor, e.g., a conveyor loop, a conveyor belt, and/or a carrier drum, etc. Disposed around the pocket 102 is a chamfer area 104. The chamfer area 104 provides a sloped path into the pocket 102 and helps direct a pellet-shaped article into the pocket. A pocket wall 110 defines an interior perimeter of the pocket 102. In the pocket 102 there is a product settling area 108 and a dimple 106 within the product settling area. The product settling area 108 may essentially be a bottom surface of the pocket and the dimple 106 in the product settling area is shaped to position, hold, or bias a portion of the pellet-shaped article towards and/or against a portion of the pocket wall 110. The dimple 106 may be defined in the product settling area 108 by an edge 112. In summary, as pellet-shaped articles are fed into the carrier bars 100 as shown in Fig. 1, for example, the chamfer area 104 directs individual pellet-shaped articles into individual pockets 102, then the pellet-shaped article may seat in the dimple 106 in the product settling area 108 and a portion of the pellet-shaped article is held against the pocket wall 110. The edge 112 that defines the dimple 106 allows for more consistent seating of the pellet-shaped article within the pocket 102 and against the pocket wall 110.

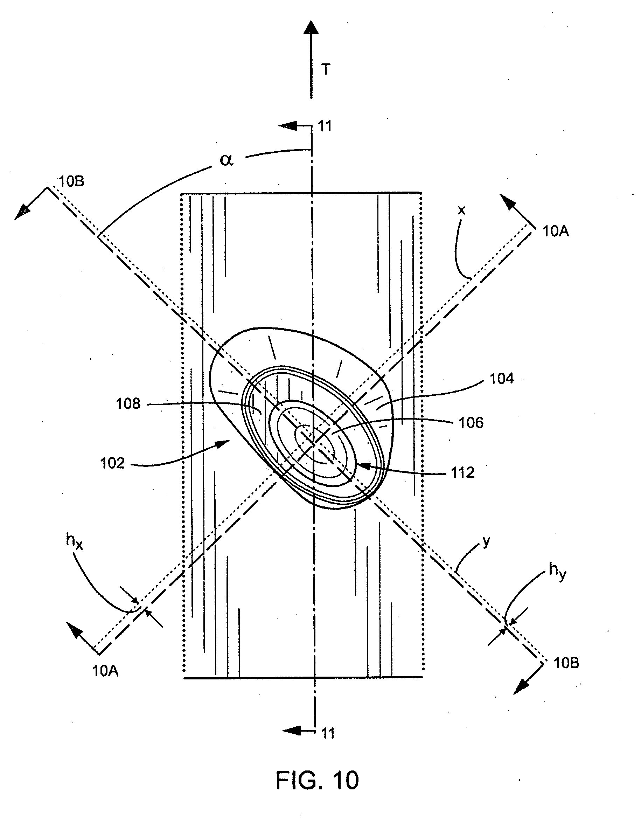

Fig. 10 shows a detailed top view of a pocket 102, according to an example of the present technology. The chamfer area 104 is disposed around the pocket 102 substantially in the direction of travel T of the carrier bar 100, such that the chamfer area may serve to guide a pellet-shaped article into the pocket. The pocket 102 in this view may be defined by two axes, x and y. The y-axis is a major axis that bisects the pocket longitudinally. The x-axis is oriented perpendicularly to the y-axis and also bisects the pocket perpendicular to the y-axis. At the bottom of the product settling area 108 is a dimple 106 defined therein by the edge 112. The dimple may also be defined by two axes shown as lines 10A-10A and 10B-10B. Axis 10B-10B bisects the dimple 106 longitudinally and is parallel to the major axis y of the pocket 102. Axis 10A-10A bisects the dimple 106 perpendicularly to axis 10B-10B and is parallel to the pocket minor axis x.

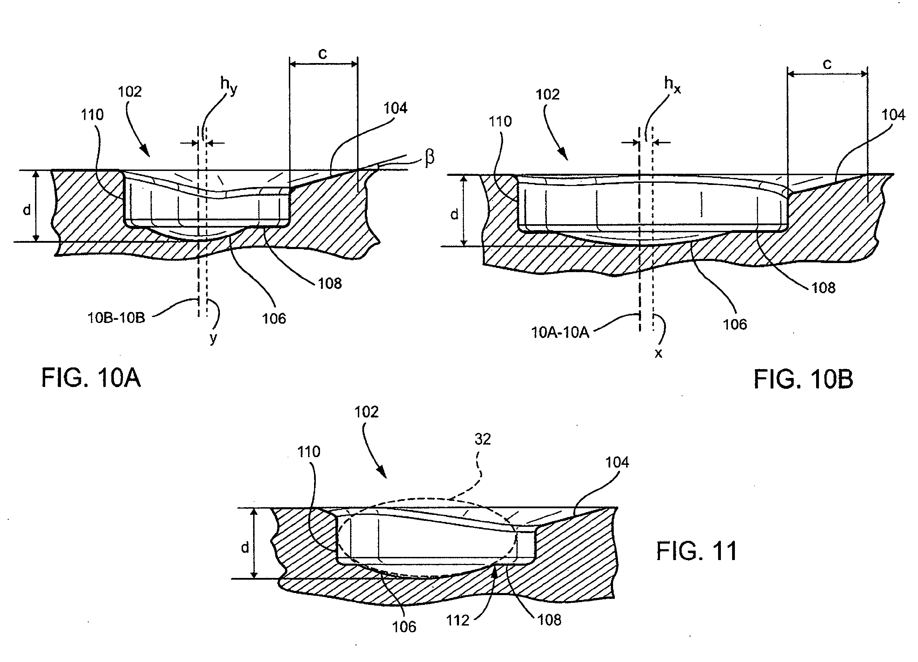

Also, shown in this exemplary view is the dimple 106 being offset with respect to the pocket 102. In this view, the dimple 106 is offset along both axes, however it should be understood that the dimple can be offset within the pocket 102 along only one or the other axis. In this view, the pocket minor axis x and dimple minor axis 10A-10A are offset from one another by a distance hₓ. Also, the pocket major axis y and the dimple major axis 10B-10B are offset from one another by a distance h_{y}. The pocket 102 is shown angled or offset from the direction of travel T or transverse axis of the carrier bar 100 by an angle α. By offsetting the dimple 106 within the pocket 102 along both axes and angling the pocket with respect to the direction of travel a pellet-shaped article 32, when seated therein, will be positioned, held, or biased towards and/or against the pocket wall 110, as best shown in Fig. 11.

Fig. 10A shows a cross-sectional view of the pocket 102 taken through line 10A-10A of Fig. 10. In this view, it can again be seen how the major axes are offset from one another. The dimple major axis 10B-10B is offset from the pocket major axis y by a distance of h_{y}. The dimple 106 is shown as concave and crowned but may also be any other suitable shape, e.g. conical. Shown also in this view is a chamfer width c of the chamfer area 104that may be variable about the pocket 102 as can be seen in Fig. 10. The chamfer area 104 may also have a chamfer angle β that defines the slope of the chamfer into the pocket and the chamfer angle may too be variable about the pocket 102, or it may be constant.

Fig. 10B shows another cross-sectional view of the pocket 102 taken through line 10B-10B of Fig. 10. In this view, it can again be seen how the minor axes are offset from one another. The dimple minor axis 10A-10A is offset from the pocket minor axis x by a distance of hₓ. The chamfer width c is shown slightly wider than in Fig. 10A, thus depicting its variability about the pocket 102.

Fig. 11 shows another cross-sectional view of the pocket 102 taken through line 11-11 of Fig. 10. Line 11-11 is parallel to the direction of travel T such that Fig. 11 shows a cross-section of the pocket perpendicular to the direction of travel. In this view a pellet-shaped article 32 is also shown in phantom to demonstrate how it may seat within the pocket 102. The dimple 106 may be profiled to conform substantially to a portion of the pellet-shaped article 32. Also, the depth d of the pocket, i.e. the distance from a top surface of the carrier bar 100 to the lowest point of the dimple 106 may be dimensioned such that when a pellet-shaped article 32 is seated therein a portion of the pellet-shaped article may extend above the top surface of the carrier bar (i.e. h_{c} is greater than d). Such an arrangement is particularly suited for carrying out contact-type processing, e.g., contact printing. However, it should also be noted that for certain processing methods (e.g., non-contact processing, including ink-jet printing, laser drilling, laser printing, inspection, etc.) the top portion of the pellet-shaped article 34 may be flush or below the top surface of the carrier bar. The pocket depth d would then be equal to or greater than h_{c}, respectively. It is also contemplated, however, that the pellet-shaped article 32 may extend above the top surface of the carrier bar 100 for the aforementioned non-contact processing methods. It is further contemplated that contact-type processing methods may be performed on the pellet-shaped article 32 when it is flush with or below the top surface of the carrier bar 100. Also exemplified in this view is the pellet-shaped article 32 being positioned, held, or biased towards and/or against the pocket wall 110. When seated in the dimple 106 in this manner, the pellet-shaped article 32 will be held in an asymmetric position relative to the pocket 102.

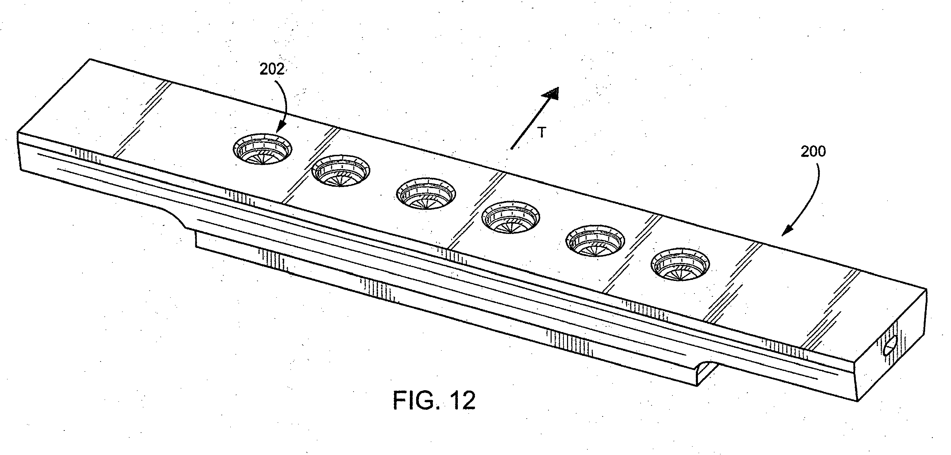

Fig. 12 shows another exemplary carrier bar 200 according to an example of the present technology in perspective view. The carrier bar 200 includes a plurality of pockets 202 and travels in direction T.

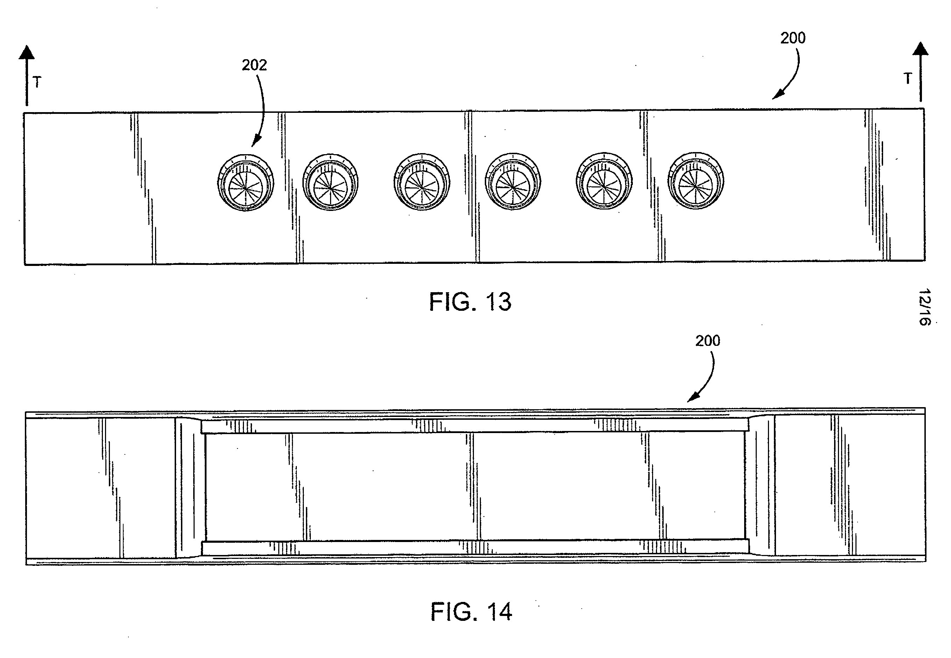

Fig. 13 shows a top view of the carrier bar 200 and pockets 202. Arrows T indicate the direction of travel.

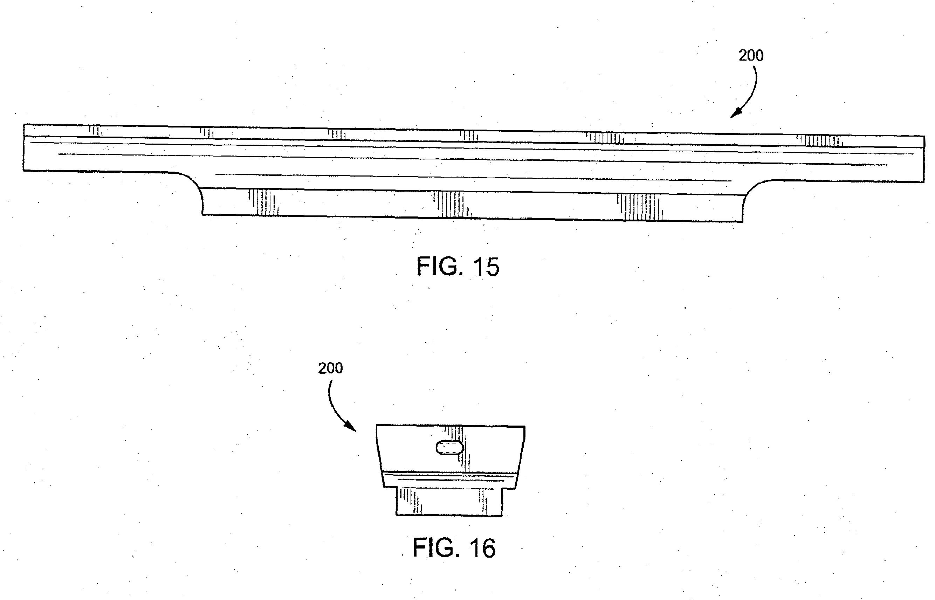

Fig. 14 shows a bottom view of the carrier bar 200. Fig. 15 shows a side view of the carrier bar 200. Fig. 16 shows a side or end view of the carrier bar 200.

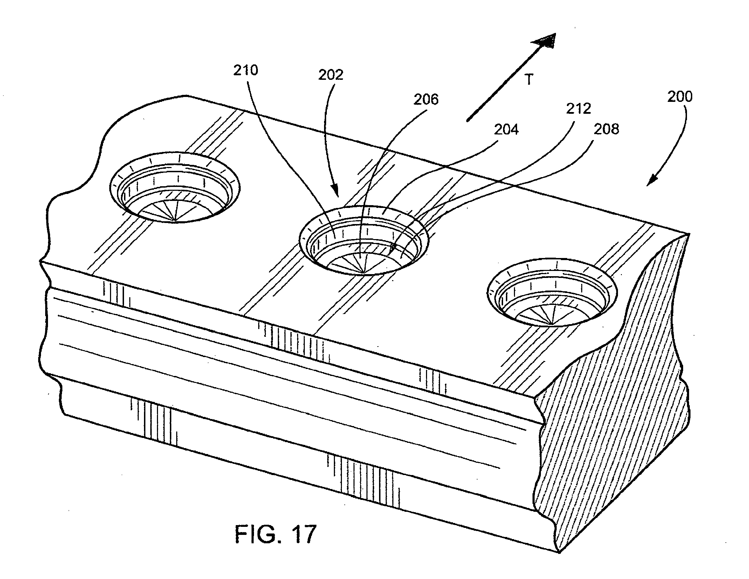

Fig. 17 shows a detailed perspective view of a pocket 202 on the carrier bar 200, according to an example of the present technology. While this view shows the pocket 202 disposed in a carrier bar, it is also understood that such a pocket may be located on or provided to any conveyor, e.g., a conveyor loop, a conveyor belt, and/or a carrier drum, etc. Disposed around the pocket 202 is a chamfer area 204. The chamfer area 204 provides a sloped path into the pocket 202 and helps direct a pellet-shaped article into the pocket. A pocket wall 210 defines an interior perimeter of the pocket 202. In the pocket 202 there is a product settling area 208 and a dimple 206 within the product settling area. The product settling area 208 may essentially be a bottom surface of the pocket and the dimple 206 in the product settling area is shaped to position, hold, or bias a portion of the pellet-shaped article towards and/or against a portion of the pocket wall 210. The dimple 206 may be defined in the product settling area 208 by an edge 212. The edge 212 may be asymmetric to the pocket wall 210. In summary, as pellet-shaped articles are fed into the carrier bars 200 as shown in Fig. 1, for example, the chamfer area 204 directs individual pellet-shaped articles into individual pockets 202, then the pellet-shaped article may seat in the dimple 206 in the product settling area 208 and a portion of the pellet-shaped article is held against the pocket wall 210. The edge 212 that defines the dimple 206 allows for more consistent seating of the pellet-shaped article within the pocket 202 and against the pocket wall 210.

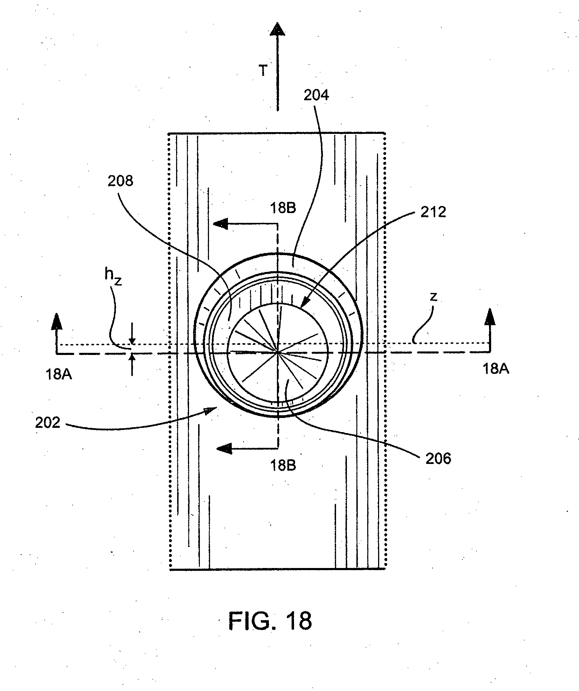

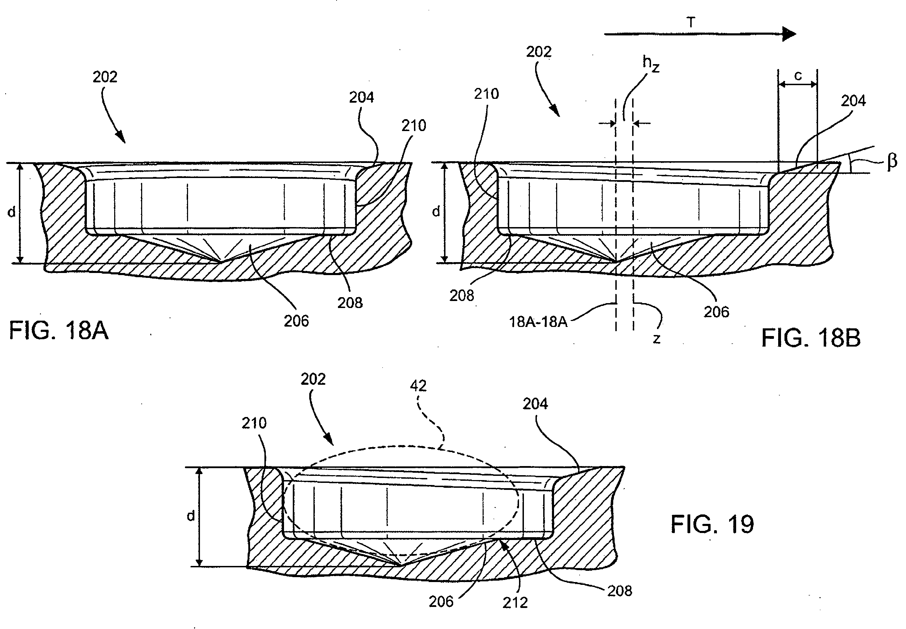

Fig. 18 shows a detailed top view of a pocket 202, according to this example of the present technology. The chamfer area 204 is disposed around the pocket 202 substantially in the direction of travel T of the carrier bar 200, such that the chamfer area may serve to guide a pellet-shaped article into the pocket. The pocket 202 in this example may be defined by two axes. Line 18B-18B bisects the pocket 202 in the direction of travel T. The z-axis bisects pocket 202 perpendicular to line 18B-18B. The dimple 206 may also be defined by two axes. Line 18B-18B bisects the dimple in the direction of travel T. Line 18A-18A bisects the dimple 206 perpendicularly to line 18B-18B and in the direction of travel T.

Also, shown in this exemplary view is the dimple 206 being offset with respect to the pocket 202. The dimple's axis 18A-18A is offset from the z-axis of the pocket along and opposite the direction of travel T. The offset distance is h_{z}. By offsetting the dimple 206 within the pocket 202 along and opposite the direction of travel T a pellet-shaped article 42, when seated therein, will be positioned, held, or biased towards and/or against the pocket wall 210, as best shown in Fig. 19.

Fig. 18A shows a cross-sectional view of the pocket 202 taken through line 18A-18A of Fig. 18. The dimple 206 is shown as concave and conical but may also be any other suitable shape, e.g. crowned.

Fig. 18B shows another cross-sectional view of the pocket 202 taken through line 18B-18B of Fig. 18. In this view, it can again be seen how the axes perpendicular to the direction of travel are offset from one another. The dimple axis 18A-18A is offset from the pocket axis z by a distance of h_{z}. Shown also in this view is a chamfer width c of the chamfer area 104 that may be variable about the pocket 102, as can be seen in Fig. 18. The chamfer width c may decrease radially from an axis bisecting the pocket 102 in the direction of travel T. The chamfer area 204 may also have a chamfer angle P that defines the slope of the chamfer into the pocket and the chamfer angle may too be variable about the pocket 202, or it may be constant.

Fig. 19 shows another cross-sectional view of the pocket 202 taken through line 18B-18B of Fig. 18. In this view a pellet-shaped article 42 is also shown in phantom to demonstrate how it may seat within the pocket 202. The dimple 206 may be profiled to conform substantially to a portion of the pellet-shaped article 42, however in this view the pellet-shaped article is rounded and the dimple is shaped conically. Also, the depth of the pocket d, i.e. the distance from a top surface of the carrier bar 200 to the lowest point of the dimple 206 may be dimensioned such that when a pellet-shaped article 42 is seated therein a portion of the pellet-shaped article may extend above the top surface of the carrier bar (i.e. h_{c} is greater than d). Such an arrangement is particularly suited for carrying out contact-type processing, e.g., contact printing. However, it should also be noted that for certain processing methods (e.g., non-contact processing, including ink-jet printing, laser drilling, laser printing, inspection, etc.) the top portion of the pellet-shaped article 44 may be flush or below the top surface of the carrier bar. The pocket depth d would then be equal to or greater than h_{c}, respectively. It is also contemplated, however, that the pellet-shaped article 42 may extend above the top surface of the carrier bar 200 for the aforementioned non-contact processing methods. It is further contemplated that contact-type processing methods may be performed on the pellet-shaped article 42 when it is flush with or below the top surface of the carrier bar 200. Also, exemplified in this view is the pellet-shaped article 42 being positioned, held, or biased towards and/or against the pocket wall 210. When seated in the dimple 206 in this manner, the pellet-shaped article 42 will be held in an asymmetric position relative to the pocket 202.

## Claims

1. A carrier bar (100, 200) to convey at least one pellet-shaped article (32, 42) along a predetermined conveyer path in a direction of travel (T), the carrier bar (100, 200) comprising at least one pocket (102, 202) adapted to receive a pellet-shaped article (32, 42) and each pocket (102, 202) having a pocket wall (110, 210); and a product settling area (108, 208) included in each pocket (102, 202) and having a dimple (106, 206) defined by an edge (112, 212), said dimple (106, 206) adapted to seat a bottom side (36, 46) of the pellet-shaped article (32, 42), whereby said dimple (106, 206) is offset from a center of said product settling area (108, 208) and said dimple (106, 206) is shaped to position, hold, or bias a portion of the pellet-shaped article (32, 42) towards and/or against a portion of the pocket wall (110, 210) **characterized in that** the dimple (106, 206) is separated around its entire perimeter from the pocket wall (110, 210) by a surface of the product settling area (108, 208).

2. The carrier bar (100, 200) of claim 1, wherein said dimple (106, 206) is offset from the center of said product settling area (108) opposite of the direction of travel (T).

3. The carrier bar (100) of claim 1 or 2, said at least one pocket (102) comprising:
a chamfer area (104) disposed around the at least one pocket (102), said chamfer area (104) being defined by a chamfer width (c) and a chamfer angle (β), wherein the chamfer area (104) extends from the pocket (102) substantially in the direction of travel (T).

4. The carrier bar (100, 200) of any one of claims 1-3, wherein said dimple (106, 206) is crowned or conical in shape.

5. The carrier bar (100, 200) of any one of claims 1-4, wherein said pellet-shaped article (32, 42), said pocket (102, 202), said product settling area (108, 208), and said dimple (106, 206) have a similar shape when viewed from above.

6. The carrier (100) bar of any one of claim 1-5, wherein said pocket (102), said product settling area (108), and said dimple (106) are offset or angled from a transverse axis of the carrier bar (100).

7. The carrier bar (100, 200) of any one of claims 1-6, wherein the pockets (102, 202) are oriented or angled in the same direction along a length of the carrier bar (100, 200).

8. A conveyor apparatus (10) to transport pellet-shaped articles (32, 42) for processing, the conveyor apparatus (10) comprising:
at least one processing station (16);
at least one feed hopper (14); and
at least one bin (18, 20) adapted to receive the pellet-shaped articles (32, 42) after processing, **characterized in that** said conveyor apparatus (10) comprises at least one carrier bar (100, 200) of any one of claims 1-7 provided to a conveyor loop.

9. A method for transporting and processing a pellet-shaped article (32, 42), the method **characterized in that** it comprises conveying the pellet-shaped article (32, 42) within a pocket (102, 202) of a carrier bar (100, 200) in accordance with any one of claims 1 to 7 or with the conveying apparatus (10) of claim 8 along a direction of travel (T).

10. The method of claim 9, wherein said pocket (102, 202) is dimensioned such that at least a portion of a top side (34, 44) of the pellet-shaped article (32, 42) that has a predetermined height and is held therein extends above a top surface of the carrier bar (100, 200).

11. The method of claim 9 or 10, wherein a depth (d) of said pocket (102, 202) is dimensioned to be greater than, less than, or equal to a predetermined height (h_{c}) of the pellet-shaped article (32, 42).

12. The method of any one of claims 9-11, wherein the pocket (102, 202) is angled or offset from a transverse axis of the carrier bar (100, 200).

## Patentansprüche

1. Trägerbalken (100, 200) zum Befördern mindestens eines pelletförmigen Artikels (32, 42) entlang einer vorbestimmten Förderbahn in einer Fahrtrichtung (T), wobei der Trägerbalken (100, 200) mindestens eine Tasche (102, 202), die zur Aufnahme eines pelletförmigen Artikels (32, 42) geeignet ist, wobei jede Tasche (102, 202) eine Taschenwand (110, 210) hat, und einen Produktpositionierungsbereich (108, 208) umfasst, der in jeder Tasche (102, 202) eingegliedert ist und ein durch einen Rand (112, 212) definiertes Näpfchen (106, 206) hat, wobei das Näpfchen (106, 206) zur Lagerung einer Unterseite (36, 46) des pelletförmigen Artikels (32, 42) geeignet ist, wobei das Näpfchen (106, 206) von einer Mitte des Produktablagerungsbereichs (108, 208) versetzt ist und das Näpfchen (106, 206) zum Positionieren, Halten oder Schrägstellen eines Teils des pelletförmigen Artikels (32, 42) zu einem Abschnitt der Taschenwand (110, 210) hin und/oder dagegen gestaltet ist, **dadurch gekennzeichnet, dass** das Näpfchen (106, 206) um seinen gesamten Umfang herum durch eine Fläche des Produktablagerungsbereichs (108, 208) von der Taschenwand (110, 210) getrennt ist.

2. Trägerbalken (100, 200) nach Anspruch 1, wobei das Näpfchen (106, 206) entgegen der Fahrtrichtung (T) von der Mitte des Produktablagerungsbereichs (108) versetzt ist.

3. Trägerbalken (100) nach Anspruch 1 oder 2, wobei mindestens eine Tasche (102) Folgendes umfasst:
einen Abfasungsbereich (104), der um die mindestens eine Tasche (102) herum angeordnet ist, wobei der Abfasungsbereich (104) durch eine Abfasungsbreite (c) und einen Abfasungswinkel (β) definiert ist, wobei sich der Abfasungsbereich (104) von der Tasche (102) im Wesentlichen in der Fahrtrichtung (T) erstreckt.

4. Trägerbalken (100, 200) nach einem der Ansprüche 1 - 3, wobei das Näpfchen (106, 206) ballig oder konisch gestaltet ist.

5. Trägerbalken (100, 200) nach einem der Ansprüche 1 - 4, wobei der pelletförmige Artikel (32, 42), die Tasche (102, 202), der Produktpositionierungsbereich (108, 208) und das Näpfchen (106, 206) von oben gesehen eine ähnliche Form haben.

6. Trägerbalken (100) nach einem der Ansprüche 1 - 5, wobei die Tasche (102), der Produktpositionierungsbereich (108) und das Näpfchen (106) von einer Querachse des Trägerbalkens (100) versetzt oder abgewinkelt sind.

7. Trägerbalken (100, 200) nach einem der Ansprüche 1 - 6, wobei die Taschen (102, 202) in derselben Richtung entlang einer Länge des Trägerbalkens (100, 200) ausgerichtet oder abgewinkelt sind.

8. Fördervorrichtung (10) zum Transportieren von pelletförmigen Artikeln (32, 42) zur Verarbeitung, wobei die Fördervorrichtung (10) Folgendes umfasst:
mindestens eine Verarbeitungsstation (16),
mindestens einen Zuführtrichter (14) und
mindestens einen Behälter (18, 20), der zur Aufnahme der pelletförmigen Artikel (32, 42) nach der Verarbeitung geeignet ist, **dadurch gekennzeichnet, dass** die Fördervorrichtung (10) mindestens einen einer Förderschleife bereitgestellten Trägerbalken (100, 200) nach einem der Ansprüche 1 - 7 umfasst.

9. Verfahren zum Transportieren und Verarbeiten eines pelletförmigen Artikels (32, 42), **dadurch gekennzeichnet, dass** es das Befördern des pelletförmigen Artikels (32, 42) in einer Tasche (102, 202) eines Trägerbalkens (100, 200) nach einem der Ansprüche 1 bis 7 oder mit der Fördervorrichtung (10) nach Anspruch 8 entlang einer Fahrtrichtung (T) umfasst.

10. Verfahren nach Anspruch 9, wobei die Tasche (102, 202) so bemessen ist, dass sich mindestens ein Teil einer oberen Seite (34, 44) des pelletförmigen Artikels (32, 42), der eine vorbestimmte Höhe hat und darin gehalten ist, über eine obere Fläche des Trägerbalkens (100, 200) erstreckt.

11. Verfahren nach Anspruch 9 oder 10, wobei eine Tiefe (d) der Tasche (102, 202) so bemessen ist, dass sie größer als, kleiner als oder gleich eine(r) vorbestimmte(n) Höhe (h_{c}) des pelletförmigen Artikels (32, 42) ist.

12. Verfahren nach einem der Ansprüche 9 - 11, wobei die Tasche (102, 202) von einer Querachse des Trägerbalkens (100, 200) versetzt oder abgewinkelt ist.

## Revendications

1. Barre de support (100, 200) pour transporter au moins un article en forme de pastille (32, 42) le long d'une trajectoire de transport prédéterminée dans une direction de déplacement (T), la barre de support (100, 200) comprenant au moins une poche (102, 202) prévue pour recevoir un article en forme de pastille (32, 42) et chaque poche (102, 202) ayant une paroi de poche (110, 210) ; et une zone de positionnement de produit (108, 208) incluse dans chaque poche (102, 202) et ayant un creux (106, 206) défini par un bord (112, 212), ledit creux (106, 206) étant prévu pour recevoir un côté inférieur (36, 46) de l'article en forme de pastille (32, 42), ledit creux (106, 206) étant décalé par rapport à un centre de ladite zone de positionnement de produit (108, 208) et ledit creux (106, 206) étant formé de manière à positionner, retenir ou solliciter une partie de l'article en forme de pastille (32, 42) vers et/ou contre une partie de la paroi de poche (110, 210), **caractérisé en ce que** le creux (106, 206) est séparé autour de tout son périmètre de la paroi de poche (110, 210) par une surface de la zone de positionnement de produit (108, 208).

2. Barre de support (100, 200) selon la revendication 1, dans laquelle ledit creux (106, 206) est décalé du centre de ladite zone de positionnement de produit (108) à l'opposé du sens de déplacement (T) .

3. Barre de support (100) selon la revendication 1 ou 2, ladite au moins une poche (102) comprenant :
une zone de chanfrein (104) disposée autour de l'au moins une poche (102), ladite zone de chanfrein (104) étant définie par une largeur de chanfrein (c) et un angle de chanfrein (β), la zone de chanfrein (104) s'étendant depuis la poche (102) substantiellement dans la direction de déplacement (T).

4. Barre de support (100, 200) selon l'une quelconque des revendications 1 à 3, dans laquelle ledit creux (106, 206) a une forme de couronne ou une forme conique.

5. Barre de support (100, 200) selon l'une quelconque des revendications 1 à 4, dans laquelle ledit article en forme de pastille (32, 42), ladite poche (102, 202), ladite zone de positionnement de produit (108, 208) et ledit creux (106, 206) ont une forme similaire en vue de dessus.

6. Barre de support (100) selon l'une quelconque des revendications 1 à 5, dans laquelle ladite poche (102), ladite zone de positionnement de produits (108), et ledit creux (106) sont décalés ou inclinés par rapport à un axe transversal de la barre de support (100).

7. Barre de support (100, 200) selon l'une quelconque des revendications 1 à 6, dans laquelle les poches (102, 202) sont orientées ou inclinées dans la même direction le long d'une longueur de la barre de support (100, 200).

8. Appareil de transport (10) pour transporter des articles en forme de pastille (32, 42) en vue de leur traitement, l'appareil de transport (10) comprenant :
au moins un poste de traitement (16) ;
au moins une trémie d'alimentation (14) ; et
au moins un réceptacle (18, 20) prévu pour recevoir les articles en forme de pastilles (32, 42) après le traitement, **caractérisé en ce que** ledit appareil de transport (10) comprend au moins une barre de support (100, 200) selon l'une quelconque des revendications 1 à 7, prévue sur une boucle de transport.

9. Procédé de transport et de traitement d'un article en forme de pastille (32, 42), le procédé étant **caractérisé en ce qu'**il comprend le transport de l'article en forme de pastille (32, 42) à l'intérieur d'une poche (102, 202) d'une barre de support (100, 200) selon l'une quelconque des revendications 1 à 7 ou avec l'appareil de transport (10) selon la revendication 8 le long d'une direction de déplacement (T).

10. Procédé selon la revendication 9, dans lequel ladite poche (102, 202) est dimensionnée de telle sorte qu'au moins une partie d'un côté supérieur (34, 44) de l'article en forme de pastille (32, 42) qui présente une hauteur prédéterminée et qui est retenue à l'intérieur de celle-ci s'étende au-dessus d'une surface supérieure de la barre de support (100, 200).

11. Procédé selon la revendication 9 ou 10, dans lequel une profondeur (d) de ladite poche (102, 202) est dimensionnée pour être supérieure à, inférieure à ou égale à une hauteur prédéterminée (h_{c}) de l'article en forme de pastille (32, 42).

12. Procédé selon l'une quelconque des revendications 9 à 11, dans lequel la poche (102, 202) est inclinée ou décalée par rapport à un axe transversal de la barre de support (100, 200).
